(19) Europäisches Patentamt / European Patent Office / Office européen des brevets

(11) **EP 2 247 925 B1**

(12) **EUROPÄISCHE PATENTSCHRIFT**

(45) Veröffentlichungstag und Bekanntmachung des Hinweises auf die Patenterteilung:
**02.05.2018 Patentblatt 2018/18**

(51) Int Cl.:
*G01D 5/04* *(2006.01)* *B62D 15/02* *(2006.01)*
*G01B 5/24* *(2006.01)*

(21) Anmeldenummer: **09713884.6**

(22) Anmeldetag: **10.02.2009**

(86) Internationale Anmeldenummer:
**PCT/EP2009/000911**

(87) Internationale Veröffentlichungsnummer:
**WO 2009/106227 (03.09.2009 Gazette 2009/36)**

(54) **ANORDNUNG ZUR ERFASSUNG EINES DREHWINKELS**

ARRANGEMENT FOR DETECTING A ROTATION ANGLE

DISPOSITIF DE DÉTECTION D'UN ANGLE DE ROTATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **27.02.2008 DE 102008011448**

(43) Veröffentlichungstag der Anmeldung:
**10.11.2010 Patentblatt 2010/45**

(73) Patentinhaber: **Valeo Schalter und Sensoren GmbH**
**74321 Bietigheim-Bissingen (DE)**

(72) Erfinder:
• **RUETZ, Christian**
**71636 Ludwigsburg (DE)**
• **SCHOEPE, Roman**
**71638 Ludwigsburg (DE)**

(56) Entgegenhaltungen:
**EP-A- 1 477 389 EP-A- 1 731 876**
**EP-A- 1 892 498 US-A- 5 646 523**

**Beschreibung**

Stand der Technik

Die Erfindung betrifft eine Anordnung, beispielsweise zur Erfassung eines Drehwinkels eines rotierenden Bauteils beispielsweise in einer Getriebe- oder Lenkvorrichtung in einem Kraftfahrzeug, nach der Gattung des Hauptanspruchs.

Bei einem aus der DE 197 03 903 A1 bekannten Lenkwinkelsensor zur Detektierung des Drehwinkels nach der eingangs beschriebenen Art ist ein Sensor so aufgebaut, dass er berührungslos, beispielsweise mit Hallsensoren, den Drehwinkel des Lenkrades detektiert. Es ist in der Regel für elektronische Steuer- und Regelsysteme in einem Kraftfahrzeug oft eine Bestimmung des Drehwinkels und der Umdrehungszahl des Lenkrades von großer Bedeutung um ein absolutes Istsignal über die Lenkradstellung oder über eine Drehwinkeländerung des Lenkrades zur Verfügung stehen. Dieser bekannte Sensor misst dabei ausschließlich den Relativwinkel zwischen der drehbaren Lenkspindel und der Lenksäule, welche ein fester Bestandteil des Chassis des Fahrzeuges ist.

Für sich gesehen ist aus der DE 100 60 287 A1 bekannt, dass bei einem Einsatz mehrere Codespuren am drehenden Bauteil unterschiedliche Codierung so eingesetzt werden, dass mit einem Noniusverfahren bzw. mit einem modifizierten Noniusverfahren auch die Drehwinkel unter Berücksichtigung der Umdrehungszahl des drehenden Bauteils ermittelt werden können, zur Bestimmung des absolut zurückgelegten Drehweges, beispielsweise bei einem Lenkrad oder bei einem Übersetzungsgetriebe.

In der DE 103 05 592 A1 ist beschrieben, dass zwei Messungen am drehenden Bauteil vorgenommen werden, wobei hier jeweils an verschieden Durchmessern des drehenden Bauteils die Winkeländerungen abgenommen werden. Aus der DE 195 06 938 A1 und aus der DE 197 39 823 A1 ist bekannt, dass am drehenden Bauteil zwei unterschiedliche Zahnräder mit einer jeweils anderen Zähnezahl die Umdrehungen detektieren, sodass mit einem Noniusverfahren bzw. mit einem modifizierten Noniusverfahren auch hier die Drehwinkel unter Berücksichtigung der Umdrehungszahl des drehenden Bauteils ermittelt werden können.

Ferner sind für sich gesehen aus der EP 15748 A1 und der DE 102006015361 A1 sogenannte Hypozykloidgetriebe bekannt, bei denen ein Flansch mit einer kreisförmigen Zahnung versehen ist, welcher beispielsweise für einen Gelenkmechanismus an einem Fahrzeugsitz zu einem Hypozykloid- oder auch sogenannten Umfangwälzgetriebe zugehörig ist.

Die EP 1 892 498 A1 betrifft einen Drehwinkelsensor, bei dem eine Lenkwelle über ein außen verzahntes Zahnrad mit zwei Satelliten einen ersten Nebenrotor mit erhöhter Drehgeschwindigkeit und einen zweiten Nebenrotor mit reduzierter Drehgeschwindigkeit antreibt. Der Nebenrotor mit reduzierter Drehgeschwindigkeit ist dabei über ein Planentengetriebe mit der Lenkwelle gekoppelt.

Aus der US 5,646,523 A ist eine gattungsgemäße Anordnung zum Erfassen von Drehwinkeln eines Fahrzeuglenkrades bekannt, bei dem eine Lenksäule über ein außen verzahntes Zahnrad einen Satelliten mit kleinerem Umfang antreibt. Der Satellit treibt über ein Hypozykloidgetriebe ein innenverzahntes Zahnrad mit einer Codescheibe an, deren Umdrehungsgeschwindigkeit über das Hypozykloidgetriebe derart untersetzbar ist, dass hieraus mittels eines Umdrehungssensors der absolute Lenkwinkel über mehrere Umdrehungen der Lenkwelle ermittelbar ist.

Darstellung der Erfindung

Die Erfindung geht von einer Anordnung zur Erfassung von Drehwinkeln an einem rotierenden Bauteil mit Signalgebern und Sensoren aus, die in Abhängigkeit von der Drehwinkeländerung des rotierenden Bauteils von den Signalgebern erzeugte Änderungen einer physikalischen Größe als digital auswertbare Signale detektieren,,wobei dass das rotierende Bauteil mindestens einen an seinem Umfang gekoppelten, durch seine Rotation sich drehenden Satelliten kleineren Umfangs mit einem Winkelsensor aufweist, der über ein axial gekoppeltes Hypozykloidgetriebe eine ebenfalls rotierende Hypozykloidscheibe antreibt, deren Umdrehungsgeschwindigkeit durch das Hypozykloidgetriebe derart untersetzbar ist, dass hieraus eine Umdrehungszahl des rotierenden Bauteils und der absolute Lenkwinkel über mehrere Umdrehungen der Lenkwelle mit einem Umdrehungssensor ermittelbar ist.

Die Erfindung kann in vorteilhafter Weise bei einer Lenkvorrichtung in einem Kraftfahrzeug eingesetzt werden, sodass sich der Winkelsensor am Umfang einer rotierenden Welle, bevorzugt als ein Lenkwinkelsensor am Umfang einer Lenkwelle befindet.

Gemäß der Erfindung wird zur Bildung einer kostengünstigen auf kleinem Bauraum zu realisierenden Anordnung vorgeschlagen, dass das Hypozykloidgetriebe aus einer mit dem Satelliten axial gekoppelten Hypozykloidscheibe besteht, die achsparallel um einen vorgegebenen Betrag E zum Satelliten versetzt ist. Der Umdrehungssignalgeber und der Satellit sind dabei konzentrisch und der Satellit verfügt über eine um den vorgegebenen Betrag E zu seiner Symmetrieachse versetzte Kontur, die mit der Hypozykloidscheibe gekoppelt ist, bzw. diese antreibt, wobei die Hypozykloidscheibe eine innere Ausnehmung für den Umdrehungssignalgeber aufweist, die durch die um den Betrag E versetzte Achsparallelität jeweils in einem wechselnden Bereich mechanisch mit dieser gekoppelt ist bzw. von der Hypozykloidscheibe angetrieben wird.

Alternativ kann jedoch auch der Umdrehungssignalgeber ortsfest in der Hypozykloidscheibe befestigt sein, sodass dieser dann eine Taumelbewegung gegenüber dem Sensor vollführt.

Gemäß einer ersten Ausführungsform erfolgt die mechanische Kopplung des Umdrehungssignalgebers in der inneren Ausnehmung der Hypozykloidscheibe durch eine korrespondierende Zahnradstruktur. Bei einer zweiten Ausführungsform erfolgt die mechanische Kopplung des Umdrehungssignalgebers in der inneren Ausnehmung der Hypozykloidscheibe durch eine Ausgleichskupplung, vorzugsweise eine Oldham-Kupplung, mit radialen Lagerpins in dem Umdrehungssignalgeber und korrespondierend dazu mit radialen Lagenuten in der Hypozykloidscheibe oder umgekehrt. Nach einer dritten Ausführungsform erfolgt die mechanische Kopplung des Umdrehungssignalgebers in der inneren Ausnehmung der Hypozykloidscheibe durch mindestens einen Mitnahmepin und korrespondierend dazu mit mindestens einem Mitnahmelangloch in der Hypozykloidscheibe erfolgt oder umgekehrt.

Insbesondere um eine höhere Winkelauflösung beim Winkelsensor zu erreichen, kann das rotierende Bauteil mindestens einen weiteren an seinem Umfang gekoppelten durch seine Rotation sich drehenden Satelliten mit einem Winkelsensor aufweisen. Es kann aber auch mindestens ein weiterer Satellit mit einem Winkelsensor vorhanden sein, der allerdings mit dem einen Satelliten gekoppelt ist.

In besonders vorteilhafter Weise besteht der Winkelsensor und/oder der Umdrehungssensor jeweils aus einem mitrotierenden magnetischen Geber und jeweils einem benachbart angeordneten magnetischen Sensor, vorzugsweise ein Hall-, ein AMR- oder ein GMR-Sensor. Möglich sind aber auch andere physikalische Sensorverfahren, z. B. optische Verfahren. Die Sensoren können dabei auch Bestandteile einer auf einer Leiterplatte angebrachten Auswerteschaltung sein, sodass eine Auswertung der Winkel- und/oder Umdrehungsgrößen nach einer Chip-on-board Technologie durchführbar ist.

Bei der hier beschriebenen Erfindung können der Winkel- und der Umdrehungssensor somit unter einem Satelliten angeordnet werden, was viele Vorteile, z.B. hinsichtlich Bauraum und Winkelauflösung hat. Weiterhin wird bei der hier beschriebenen Erfindung die Taumelbewegung des Hypozykloidrades wieder in eine rotatorische Bewegung des Signalgebers des Umdrehungssensors umgewandelt oder der Signalgeber ist in der Hypozykloidscheibe ortsfest befestigt. Dies ermöglicht, dass auch dieser Signalgeber mit einer hohen Winkelauflösung ausgewertet werden kann, z. B. mit einem diametral magnetisierten Ringmagnet mit zwei zueinander um 90 Grad verdrehten Hall-ICs oder ein diametral magnetisierter Zylindermagnet mit einem zentrisch positionierten 2-Achsen-Hall-IC.

Bei einer Verwendung als Lenkwinkelsensor können somit neben der kostengünstigen und für kleine Bauräume realisierbaren Anordnung auch einfach ansteuerbare und auswertbare Sensorelemente verwendet werden. Solche Sensoren detektieren den absoluten Winkel über mehrere Lenkwellenumdrehungen mit einer kleinen Winkelauflösung von ca. 0,1°. Weiterhin kann ein solcher erfindungsgemäßer Lenkwinkelsensor auch nach einem Start des Kraftfahrzeugs "True Power On" fähig auch bei entleerter oder abgeklemmter Batterie sein, d.h., der Initialisierungswinkel ist 0°, was mit dem mechanischen Umdrehungssensorsystem möglich ist. Anderes Systeme verbrauchen beim Zustand "Zündung aus" einen Ruhestrom und müssen nach einer Batterieentleerung neu initialisiert werden.

Auf einfache Weise ist die Erfindung entweder als einfache "Low Cost" Ausführung oder als teurere Ausführung für sicherheitskritische Anforderungen ausführbar, wobei die Anpassung jeweils überwiegend über die elektronischen Komponenten, z.B. ein oder zwei Mikroprozessoren, Single oder Double-Hall-ICs, einfache Bus-Protokolle wie PWM oder SENT oder komplexere Bus-Protokolle wie CAN oder Flexray, erfolgen kann.

Kurze Beschreibung der Zeichnung

Ausführungsbeispiele der Erfindung werden anhand der Figuren der Zeichnung erläutert. Es zeigen:

Figur 1 zeigt eine schematische Draufsicht auf einen Lenkwinkelsensor als erfindungsgemäße Anordnung mit einem Winkelsensor und einem Umdrehungssensor an jeweils einem Satelliten,

Figur 2 eine Detailansicht auf den Umdrehungssensor nach der Figur 1 mit einem Hypozykloidgetriebe als Sprengzeichnung,

Figur 3 eine Detailansicht des Hypozykloidgetriebes nach der Figur 2 im zusammengefügten Zustand,

Figur 4 eine Detailansicht einer Ausführungsform des Hypozykloidgetriebes mit einem ortsfesten Signalgeber im zusammengefügten Zustand

Figur 5 eine Prinzipskizze zur Erläuterung der Funktion des Hypozykloidgetriebes,

Figur 6 ein Diagramm, aus dem die den Winkel- und Umdrehungsverläufen entsprechenden Sensorsignale ersichtlich sind,

Figuren 7 bis 9 verschiedene Ausführungen der mechanischen Kopplung im Hypozykloidgetriebe und

Figur 10 eine Ausführung mit einem Hypozykloidzahnrad.

Wege zur Ausführung der Erfindung

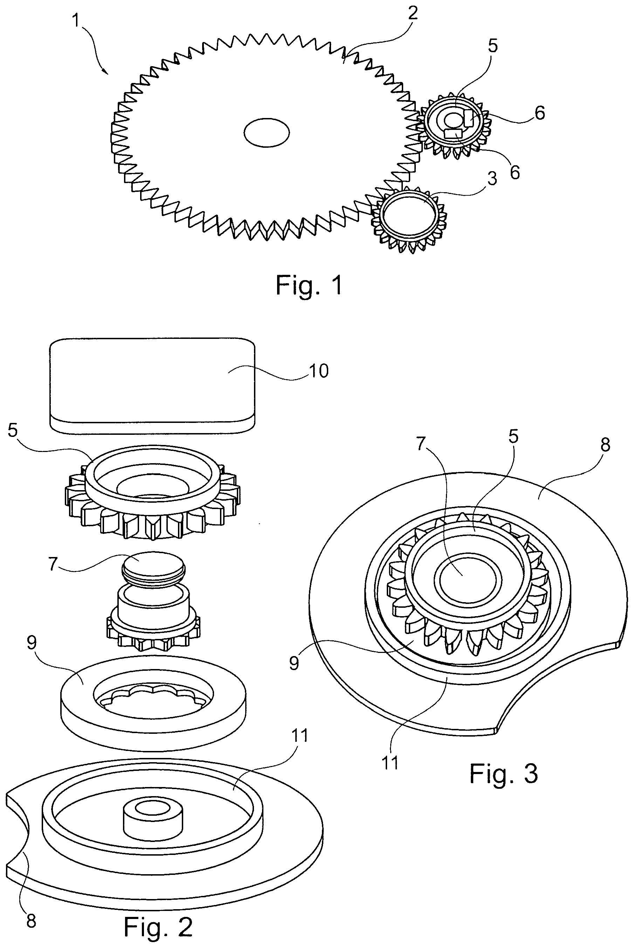

Aus Figur 1 ist eine Anordnung eines Lenkwinkelsensors 1 mit einem von einer hier nicht gezeigten Lenkwelle eines Fahrzeugs angetriebenen Rotor 2 mit einem äußeren Zahnrad ersichtlich. Der Lenkwinkelsensor 1 detektiert somit den Drehwinkel der Lenkwelle, da die Lenkwelle den Rotor 1 und dieser über die äußere Verzahnung einen Satelliten 3 mit einem hier nicht sichtbaren Winkelsensorsystem antreibt, der achsparallel zur Lenkwelle positioniert ist.

Am Satellit 3 befindet sich somit das Winkelsensorsystem mit einem Winkelsignalgeber, der den Feinwinkel der Lenkwelle ermittelt, mit beispielsweise ca. 0,1° Winkelauflösung. Der Winkelsignalgeber ist im Satellit 3 ortsfest positioniert und rotiert synchron mit diesem und zum hier nicht ersichtlichen Winkelsignalgeber ist ein Winkelsensor positioniert, der dessen Rotation detektiert.

An einem Satelliten 5 befindet sich ein erfindungsgemäßes Umdrehungssensorsystem, das die Umdrehung des Satelliten 5 ermittelt. Aufgrund eines vom Satelliten 5 angetriebenen Hypozykloidgetriebes, das anhand der folgenden Figuren erläutert wird, dreht sich ein von diesem Getriebe angetriebener Umdrehungssignalgeber eines Umdrehungssensorsystem 6 über den gesamten zu messenden Winkelbereich der Lenkwelle mit max. 1 Umdrehung.

Der Satellit 5 mit dem Umdrehungssensorsystem rotiert bevorzugt um maximal eine Umdrehung über den gesamten Lenkwinkelbereich, er kann jedoch über mehrere Umdrehungen der Lenkwelle rotieren, wobei dann ein auswertbarer Nonius zwischen den periodischen Signalen des Winkels.- und des Umdrehungssensors vorhanden sein muss, der über eine elektronische Auswertung berechenbar ist.

Beispielsweise haben übliche Lenkwellen einen Winkelbereich von 4 bis 6 Umdrehungen, was einem Winkelbereich von 1440° bis 2160° entspricht. Zum Signalgeber des Umdrehungssensorsystems 6 ist ein Umdrehungssensor positioniert, der dessen Rotation detektiert.

Gemäß eines hier nicht gezeigten Ausführungsbeispiels kann der Satellit 3 auch weggelassen werden und die Funktion des Winkelsensors kann dann auch mit dem Satelliten 5 ausgeführt werden.

Wie aus der Figur 1 ersichtlich, treibt der von der Lenkwelle angetriebene Rotor 2 den Satelliten 5 des Umdrehungssensorsystems 6 an. Der aus den Figuren 2 und 3 deutlicher erkennbare Satellit 5 ist über einen Signalgeber 7, zum Beispiel ein zylindrischer Magnet, rotatorisch gelagert, der wiederum über ein Gehäuse 8 rotatorisch gelagert werden kann. Außerdem ist eine Hypozykloidscheibe 9 und eine Leiterplatte 10 mit Hall-ICs als Sensoren der Sensorsysteme vorhanden.

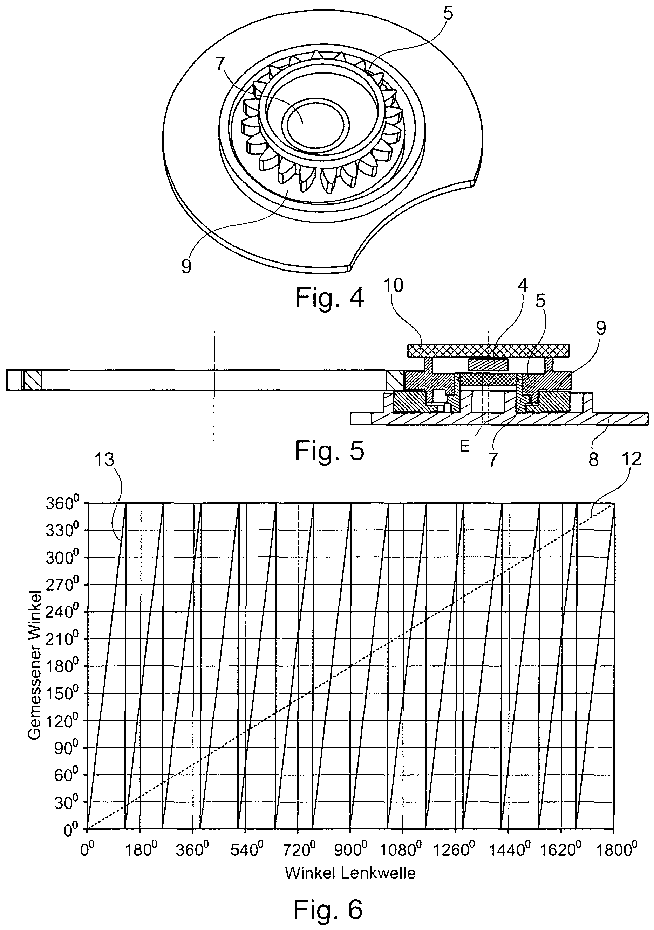

Aus Figur 4 ist entnehmbar, dass der Signalgeber 7 ortsfest in der Hypozykloidscheibe 9 befestigt ist und zum Beispiel ein zylindrischer Magnet ist, der dann eine Taumelbewegung gegenüber dem hier nicht dargestellten Sensorsystem vollführt.

Aus der Figur 5 ist im Schnitt zu entnehmen, wie die Hypozykloidscheibe 9 mit einem Abstand E exzentrisch zur Rotationsachse des Satelliten 5 positioniert ist. Das Rotationszentrum dieser exzentrisch positionierten Hypozykloidscheibe 9 rotiert somit auf einer Kreisbahn mit Radius E um die Rotationsachse des Satelliten 5. Der Zylinder der Hypozykloidscheibe 9 hat dabei immer Kontakt mit einem statischen Hohlzylinder 11, der z.B. eine Kontur des umgebenden Gehäuses 8 ist. Die Symmetrieachse dieses statischen Hohlzylinders 11 ist konzentrisch zum Rotationszentrum des Satelliten 5. Ist die mechanische Reibung zwischen der Hypozykloidscheibe 9 und dem Hohlzylinder 11 groß genug, wälzt oder rollt sich die Hypozykloidscheibe 9 auf dem Hohlzylinder 11 ab. Weiterhin ist ein Sensor 4 mit einer Leiterplatte 10 ersichtlich.

Der Winkel, den die Hypozykloidscheibe 9 dabei bei einer Umdrehung des Satelliten 5 rotiert, ergibt sich aus der Differenz der Kreisumfänge des kleineren Zylinders der Hypozykloidscheibe 9 und des größeren Hohlzylinders 11 des Gehäuses 8. Diese Differenz kann durch die beiden Parameter Durchmesser D1 der Hypozykloidscheibe 9 und dem Abstand E beeinflusst werden. Aus den beiden Parametern resultiert der Durchmesser D2 des Hohlzylinders 11 und somit die Differenz der beiden Kreisumfänge ΔU.

Danach muss die Kreisbahnbewegung des Rotationszentrums der Hypozykloidscheibe 9 noch in eine reine rotatorische Bewegung umgewandelt werden, damit eine genaue Winkeldetektion durch den Sensor am Umdrehungssensorsystem 6 möglich ist. Wie schon vorher beschrieben, ist der Signalgeber des Umdrehungssensorsystems 6 konzentrisch zum Satelliten 5 rotatorisch gelagert. Hierfür wird somit eine die Kreisbahnbewegung ausgleichende Mitnahme benötigt, bei der die Hypozykloidscheibe 9 den Signalgeber 7 rotatorisch mitnimmt.

Der Rotationswinkel δ der Hypozykloidscheibe 9 berechnet sich mit D2=D1+2*E aus dem Umfang U1 der Hypozykloidscheibe 9

$$U1 = \pi * D1,$$

dem Umfang U2 des statischen Hohlzylinders

$$U2 = \pi * D2 \text{ mit der Differenz}$$

$$\Delta U = U1-U2 = 2* \pi* E.$$

Für die Winkel gilt dann folgendes Verhältnis:

$$\frac{\delta}{360°} = \frac{\Delta U}{U1} \Leftrightarrow \delta = 360° \cdot \frac{\Delta U}{U1}$$

entsprechend

$$\delta = \frac{720° \cdot E}{D1} \quad .$$

Figur 6 zeigt den Verlauf 12 des Umdrehungssignals, das hier über einen Winkel von 1800° entsprechend 5 Umdrehungen mit dem Verlauf 13 ein über 120° periodisches Signal ist.

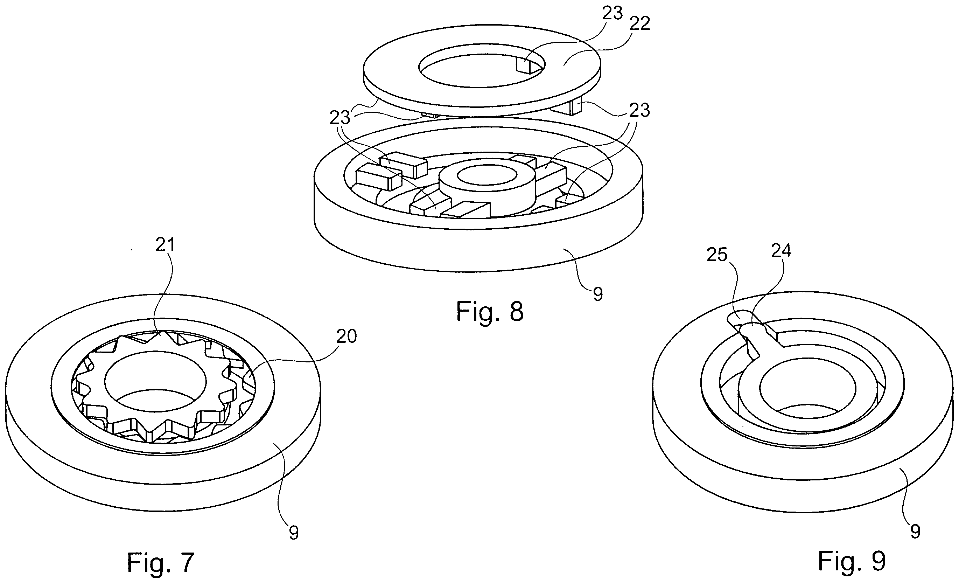

Es gibt hier mehrere Varianten der ausgleichenden Mitnahme, nämlich ein Zahnrad-Hypozykloidgetriebe nach Figur 7 mit einer Innenverzahnung 20 und am Signalgeber über eine Außenverzahnung 21. Die Zähnezahl beider Zahnräder ist hierbei gleich. Dieses Hypozykloidgetriebe, realisiert über Zahnräder, nimmt den Signalgeber mit, lässt diesen synchron zur Hypozykloidscheibe 9 rotieren und gleicht die Kreisbahnbewegung des Hypozykloidscheibe-Rotationszentrums aus.

Bei einer anderen Variante wird eine Ausgleichskupplung 22 nach Figur 8, zum Beispiel eine sogenannte Oldham-Kupplung, verwendet. Über diese Ausgleichskupplung 22 wird die Rotation der Hypozykloidscheibe 9 synchron auf den Signalgeber übertragen. Die über 90° positionierten Längslagerstellen 23 an der Hypozykloidscheibe 9 und am Signalgeber gleichen auch hier die Kreisbahnbewegung des Hypozykloidscheibe-Rotationszentrums aus.

Gemäß einer weiteren Variante nach Figur 9 kann ein Mitnahmepin 24 am Signalgeber angebracht werden, der in ein Langloch 25 der Hypozykloidscheibe 9 greift. Der Mitnahmepin 24 gleicht die Taumelbewegung der Hypozykloidscheibe 9 aus, indem er im Langloch 25 in radialer Richtung Spiel hat. In tangentialer Richtung ist der Mitnahmepin 24 quasi spielfrei gelagert, wodurch der Signalgeber von der Hypozykloidscheibe 9 rotatorisch mitgenommen wird.

In allen beschriebenen Fällen wird das Signal des rotierenden Umdrehungssignalgebers vom Umdrehungssensor 6 detektiert und zusammen mit dem Signal des Winkelsensors 4 kann in einer Auswerteeinheit der absolute Lenkwinkel berechnet werden. Hierbei ist noch zu erwähnen, dass auch alleinig mit dem Umdrehungssensor 6, d.h. ohne den Winkelsensor 4 der absolute Lenkwinkel berechnet werden kann, wobei lediglich die Winkelauflösung größer, ca.0,5°, ist und die Winkelgenauigkeit geringer ist. Der zusätzliche Winkelsensor 4 verbessert die Winkelauflösung und die Winkelgenauigkeit des berechneten absoluten Lenkwinkels.

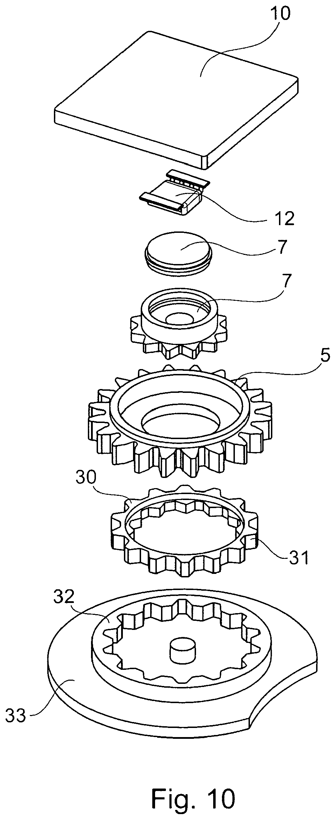

Aus Figur 10 ist ein weiteres Ausführungsbeispiel eines erfindungsgemäßen Hypozykloidgetriebes mit einer Leiterplatte 10 und Hall-ICs 12 gezeigt, bei dem im Unterschied zu der Ausführung nach den Figuren 2 und 3 ein Hypozykloidzahnrad 30 vorhanden ist, das auch außen eine Verzahnung 31 aufweist und mit einer Innenverzahnung 32 in einem entsprechend ausgeführten Gehäuse 33 in der gleichen Weise korrespondiert, wie zuvor beschrieben, sodass hiermit eine weiter Untersetzung der Umdrehung möglich ist. Die Verzahnung des Hypozykloidzahnrades 30 hat nach diesem Ausführungsbeispiel mindestens einen Zahn weniger als die Innenverzahnung 32.

**Patentansprüche**

1. Anordnung zur Erfassung von Drehwinkeln eines rotierenden Bauteils, mit - dem im Betrieb rotierenden Bauteil, mit einem Umdrehungssensorsystem, bestehend aus Gebern und Sensoren, die in Abhängigkeit von der Drehwinkeländerung des rotierenden Bauteils (2) von den Gebern erzeugte Änderungen einer physikalischen Größe als digital auswertbare Signale detektieren, mit mindestens einem an den Umfang des rotierenden Bauteils (2) koppelbaren und durch seine Rotation drehbaren Satelliten (5) kleineren Umfangs (5) vorzugsweise mit einem Winkelsensor, mit einem Hypozykloidgetriebe und mit einer Hypozykloidscheibe (9), wobei der Satellit (5) dazu ausgelegt ist über das axial gekoppelte Hypozykloidgetriebe die ebenfalls rotierbare Hypozykloidscheibe (9) anzutreiben, (9) deren Umdrehungsgeschwindigkeit durch das Hypozykloidgetriebe derart untersetzbar ist, dass hieraus eine Umdrehungszahl des rotierenden Bauteils (2) und der absolute Drehwinkel über mehrere Umdrehungen des rotierenden Bauteils (2) mit dem Umdrehungssensorsystem (6) ermittelbar ist, **dadurch gekennzeichnet, dass** das Hypozykloidgetriebe aus einer mit dem Satelliten (5) axial gekoppelten Hypozykloidscheibe (9) besteht, die achsparallel um einen vorgegebenen Betrag (E) zum Satelliten (5) versetzt ist, wobei der Satellit (5) eine um den vorgegebenen Betrag (E) zu seiner Symmetrieachse versetzte Kontur aufweist, die mit der Hypozykloidscheibe (9) gekoppelt ist.

2. Anordnung nach Anspruch 1, **dadurch gekennzeichnet, dass** ein Umdrehungssignalgeber des Umdrehungssensorsystems konzentrisch zum Satelliten rotatorisch gelagert ist..

3. Anordnung nach Anspruch 2, **dadurch gekennzeichnet, dass** der Umdrehungssignalgeber ortsfest in der Hypozykloidscheibe befestigt ist und dass die Hypozykloidscheibe mit einem statischen Hohlzylinder gekoppelt ist.

4. Anordnung nach Anspruch 2, **dadurch gekennzeichnet, dass** die mechanische Kopplung des Umdrehungssignalgebers in der inneren Ausnehmung der Hypozykloidscheibe durch eine korrespondierende Zahnradstruktur erfolgt.

5. Anordnung nach Anspruch 2, **dadurch gekennzeichnet, dass** die mechanische Kopplung der Umdrehungssignalgeberscheibe in der inneren Ausnehmung der Hypozykloidscheibe durch eine Ausgleichskupplung, vorzugsweise eine Oldham-Kupplung, erfolgt, die über mindestens zwei um 90° versetzte Längslagerpins und korrespondierend dazu die Hypozykloidscheibe und der Umdrehungssignalgeber jeweils über mindestens eine Längslagernut verfügt oder dass die Ausgleichskupplung über mindestens zwei um 90° versetzte Längslagernuten und korrespondierend dazu die Hypozykloidscheibe und der Umdrehungssignalgeber jeweils über mindestens einen Längslagerpin verfügt.

6. Anordnung nach Anspruch 2, **dadurch gekennzeichnet, dass** die mechanische Kopplung der Scheibe in der inneren Ausnehmung der Hypozykloidscheibe durch mindestens einen Mitnahmepin im Signalgeber und korrespondierend dazu mit mindestens einem Mitnahmelangloch in der Hypozykloidscheibe oder im Signalgeber erfolgt.

7. Anordnung nach einem der vorhergehenden Ansprüche, **dadurch gekennzeichnet, dass** das rotierende Bauteil mindestens einen weiteren an seinem Umfang gekoppelten durch seine Rotation sich drehenden Satelliten mit einem Winkelsensor aufweist.

8. Anordnung nach einem der vorhergehenden Ansprüche, **dadurch gekennzeichnet, dass** ein weiterer durch seine Rotation sich drehender Satellit mit einem Winkelsensor vorhanden ist, der mit dem einen Satelliten vorzugsweise über ein Hypozykloidzahnrad gekoppelt ist.

9. Anordnung nach einem der vorhergehenden Ansprüche, **dadurch gekennzeichnet, dass** der Umdrehungssensor aus einem mitrotierenden magnetischen Geber und einem benachbart angeordneten magnetischen Sensor besteht..

10. Anordnung nach Anspruch 9, **dadurch gekennzeichnet, dass** der jeweilige magnetischen Sensor, vorzugsweise ein Hall-, ein AMR- oder ein GMR-Sensor ist.

11. Anordnung nach einem der Ansprüche 9 oder 10, **dadurch gekennzeichnet, dass** die Sensoren Bestandteile einer auf einer Leiterplatte angebrachten Auswerteschaltung sind, sodass eine Auswertung der Winkel- und/oder Umdrehungsgrößen nach einer Chip-on-board Technologie durchführbar ist.

12. Verwendung der Anordnung nach einem der vorhergehenden Ansprüche, **dadurch gekennzeichnet, dass** die Anordnung Bestandteil einer Lenkvorrichtung in einem Kraftfahrzeug ist.

## Claims

1. Arrangement for detecting the rotation angles of a rotating component, having the component, rotating in operation, having a rotation sensor system, consisting of signal generators and sensors which detect changes in a physical variable which are generated by the signal generators as a function of the change in rotation angle of the rotating component (2), as signals which can be evaluated digitally, having at least one satellite (5) which can be coupled to the circumference of the rotating component (2), can be rotated as a result of its rotation and has a relatively small circumference (5), preferably having an angle sensor, having a hypocycloidal transmission and having a hypocycloidal disc (9), wherein the satellite (5) is designed to drive the likewise rotatable hypocycloidal disc (9) via the axially coupled hypocycloidal transmission, (9) whose rotational speed can be stepped down by means of the hypocycloidal transmission in such a way that an rpm of the rotating component (2) and the absolute rotation angle can be determined therefrom over a plurality of revolutions of the rotating component (2) by means of the rotation sensor system (6), **characterized in that** the hypocycloidal transmission is composed of a hypocycloidal disc (9) which is coupled axially to the satellite (5) and which is offset in axis-parallel fashion with respect to the satellite (5) by a predefined absolute value (E), wherein the satellite (5) has a contour which is offset with respect to its axis of symmetry by the predefined absolute value (E) and is coupled to the hypocycloidal disc (9).

2. Arrangement according to Claim 1, **characterized in that** a rotation signal generator of the rotation sensor system is rotatably mounted concentrically with respect to the satellite.

3. Arrangement according to Claim 2, **characterized in that** the rotation signal generator is mounted in a locationally fixed manner in the hypocycloidal disc and **in that** the hypocycloidal disc is coupled to a static hollow cylinder.

4. Arrangement according to Claim 2, **characterized in that** the mechanical coupling of the rotation signal generator in the internal recess of the hypocycloidal disc is carried out by means of a corresponding gearwheel structure.

5. Arrangement according to Claim 2, **characterized in that** the mechanical coupling of the rotation signal generator disc in the internal recess of the hypocycloidal disc is carried out by means of a compensation clutch, preferably an Oldham clutch, which has at least two longitudinal bearing pins which are offset by 90°, and corresponding thereto the hypocycloidal disc and the rotation signal generator each have at least one longitudinal bearing groove, or **in that** the compensation clutch has at least two longitudinal bearing grooves which are offset by 90°, and corresponding thereto the hypocycloidal disc and the rotational signal generator each have at least one longitudinal bearing pin.

6. Arrangement according to Claim 2, **characterized in that** the disc is mechanically coupled in the internal recess of the hypocycloidal disc by means of at least one driving pin in the signal generator, and corresponding thereto with at least one driving elongate hole in the hypocycloidal disc or in the signal generator.

7. Arrangement according to one of the preceding claims, **characterized in that** the rotating component has at least one further satellite which is coupled to its circumference, rotates by means of its rotation and has an angle sensor.

8. Arrangement according to one of the preceding claims, **characterized in that** a further satellite which rotates by means of its rotation and has an angle sensor is present, which angle sensor is preferably coupled to the one satellite via a hypocycloidal gearwheel.

9. Arrangement according to one of the preceding claims, **characterized in that** the rotation sensor is composed of a magnetic signal generator which also rotates and a magnetic sensor which is arranged adjacently.

10. Arrangement according to Claim 9, **characterized in that** the respective magnetic sensor is preferably a Hall sensor, an AMR sensor or a GMR sensor.

11. Arrangement according to one of Claims 9 or 10, **characterized in that** the sensors are components of an evaluation circuit which is mounted on a printed circuit board, with the result that it is possible to evaluate the angle variables and/or rotation variables according to a chip-on-board technology.

12. Use of the arrangement according to one of the preceding claims, **characterized in that** the arrangement is a component of a steering device in a motor vehicle.

**Revendications**

1. Dispositif de détection d'angles de rotation d'un composant rotatif,
comportant le composant rotatif en fonctionnement,
comportant un système de capteurs de rotation, constitué de transmetteurs et de capteurs détectant des variations d'une grandeur physique, générées par les transmetteurs en tant que signaux pouvant être évalués numériquement en fonction de la variation de l'angle de rotation du composant rotatif (2), comportant au moins un satellite (5) de circonférence inférieure (5) pouvant être couplé à la circonférence du composant rotatif (2) et pouvant être mis en rotation du fait de sa rotation, de préférence muni d'un capteur d'angle,
comportant une transmission hypocycloïde et un disque hypocycloïde (9),
dans lequel le satellite (5) est conçu pour entraîner le disque hypocycloïde (9) également rotatif par l'intermédiaire de la transmission hypocycloïde couplée axialement, (9) dont la vitesse de rotation peut être démultipliée par la transmission hypocycloïde de manière à ce qu'un nombre de tours du composant rotatif (2) et l'angle de rotation absolu sur plusieurs tours du composant rotatif (2) puissent être obtenus au moyen du système de capteur de rotation (6), **caractérisé en ce que** la transmission hypocycloïde est constituée d'un disque hypocycloïde (9) couplé axialement au satellite (5), lequel disque hypocycloïde est décalé parallèlement à l'axe d'une quantité (E) prédéterminée par rapport au satellite (5), dans lequel le satellite (5) présente un contour décalé de la quantité prédéterminée (E) par rapport à son axe de symétrie, lequel contour est couplé au disque hypocycloïde (9).

2. Dispositif selon la revendication 1, **caractérisé en ce qu'**un transmetteur de signal de rotation du système de capteurs de rotation est monté tournant de manière concentrique par rapport au satellite.

3. Dispositif selon la revendication 2, **caractérisé en ce que** le transmetteur de signal de rotation est fixé de manière fixe dans le disque hypocycloïde et **en ce que** le disque hypocycloïde est couplé à un cylindre creux statique.

4. Dispositif selon la revendication 2, **caractérisé en ce que** le couplage mécanique du transmetteur de signal de rotation est réalisé dans l'évidement interne du disque hypocycloïde par une structure de roue dentée correspondante.

5. Dispositif selon la revendication 2, **caractérisé en ce que** le couplage mécanique du disque de transmetteur de signal de rotation dans l'évidement interne du disque hypocycloïde est réalisé au moyen d'un couplage compensateur, de préférence un couplage Oldham, qui présente au moins deux broches de palier longitudinales décalées de 90° et **en ce que**, de manière correspondante, le disque hypocycloïde et le transmetteur de signal de rotation présentent respectivement au moins une rainure de palier longitudinale ou **en ce que** le couplage compensateur présente au moins deux rainures de palier longitudinales décalées de 90° et, de manière correspondante, le disque hypocycloïde et le transmetteur de signal de rotation présentent respectivement au moins une broche de palier longitudinale.

6. Dispositif selon la revendication 2, **caractérisé en ce que** le couplage mécanique du disque dans l'évidement interne du disque hypocycloïde est réalisé par au moins une broche d'entraînement dans le transmetteur de signal et, de manière correspondante, comporte au moins un orifice oblong d'entraînement dans le disque hypocycloïde ou dans le transmetteur de signal.

7. Dispositif selon l'une des revendications précédentes, **caractérisé en ce que** le composant rotatif comprend au moins un autre satellite couplé à sa circonférence, tournant sous l'effet de sa rotation et muni d'un capteur d'angle.

8. Dispositif selon l'une des revendications précédentes, **caractérisé en ce qu'**il est prévu un autre satellite tournant sous l'effet de sa rotation et muni d'un capteur d'angle, qui est couplé à un satellite de préférence par l'intermédiaire d'une roue dentée hypocycloïde.

9. Dispositif selon l'une des revendications précédentes, **caractérisé en ce que** le capteur de rotation est constitué d'un transmetteur magnétique corotatif et d'un capteur magnétique disposé de manière adjacente.

10. Dispositif selon la revendication 9, **caractérisé en ce que** le capteur magnétique respectif est de préférence un capteur à effet Hall, AMR ou GMR.

11. Dispositif selon l'une des revendications 9 ou 10, **caractérisé en ce que** les capteurs sont des composants d'un circuit d'évaluation monté sur une carte de circuit imprimé, de manière à ce qu'une évaluation des grandeurs angulaires et/ou de rotation puisse être réalisée selon une technologie de puce sur carte.

12. Utilisation du dispositif selon l'une des revendications précédentes, **caractérisée en ce que** le dispositif fait partie d'un dispositif de direction dans un véhicule automobile.

Fig. 1

Fig. 2

Fig. 3

Fig. 4

Fig. 5

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19703903 A1
- DE 10060287 A1
- DE 10305592 A1
- DE 19506938 A1
- DE 19739823 A1
- EP 15748 A1
- DE 102006015361 A1
- EP 1892498 A1
- US 5646523 A